# EUROPÄISCHE PATENTANMELDUNG

(11) **EP 2 692 821 A1**
(43) Veröffentlichungstag der Anmeldung: **05.02.2014**
(21) Anmeldenummer: 12178941.6
(22) Anmeldetag: 02.08.2012
(51) Int. Cl.: C09K 3/14, B24D 3/14, C04B 35/111

(54) **Schleifkorn mit Basiskörper und Aufsatzkörper**

(71) Anmelder: ROBERT BOSCH GMBH, 70442 Stuttgart (DE)
(72) Erfinder: Hejtmann, Georg, 74395 Mundelsheim (DE); Stedile, Petra, 73732 Esslingen (DE); Fuenfschilling, Stefan, 78337 Öhningen (DE); Jenni, Adrian, 9000 St. Gallen (CH); Harzer, Andreas, 71701 Schwieberdingen (DE); Rohner, Thomas, 8546 Kefikon (CH)

(57) **Zusammenfassung**

Die Erfindung betrifft einerseits ein Schleifkorn (1110), enthaltend einen Basiskörper (1115) mit einer Unterseite (1116) und einer gegenüberliegenden Oberseite (1118) und mindestens einen Aufsatzkörper (1120) mit einer Unterseite (1121), die auf der Oberseite (1118) des Basiskörpers (1115) angeordnet ist. Die Aussenkontur (1122) der Unterseite (1121) des Aufsatzkörpers (1120) verläuft vollständig innerhalb der Aussenkontur (1119) der Oberseite (1118) des Basiskörpers (1115). Das Schleifkorn (1110) kann ein keramisches Material enthalten, insbesondere polykristallines α-Al₂O₃. Zudem sind Gesamtheiten von Schleifkörnern (10), Verfahren zum Herstellen von Schleifkörnern (10), Giessformen, Schleifartikel, Verfahren zum Herstellen von Schleifartikeln und Verfahren zum Schleifen einer Oberfläche offenbart.

## Beschreibung

Die vorliegende Erfindung betrifft Schleifkörner mit definierter Form, Gesamtheiten von Schleifkörnern, Verfahren zum Herstellen von Schleifkörnern, Giessformen, Schleifartikel mit Schleifkörnern, Verfahren zum Herstellen von Schleifartikeln sowie Verfahren zum Schleifen einer Oberfläche mit einem Schleifartikel.

Schleifkörner, insbesondere keramische Schleifkörner, mit definierter Form und Grösse sind seit einiger Zeit bekannt.

Die US 5,201,916 offenbart unter anderem flache Schleifkörner mit beispielsweise dreieckiger, rechteckiger oder kreisförmiger Form. Diese Schleifkörner werden aus einer Dispersion hergestellt, die in α-Aluminiumoxid konvertierbare Partikel und eine Flüssigkeit mit einer flüchtigen Komponente enthält. Die Dispersion wird in eine Giessform gegossen, die eine ebene Grundfläche und Vertiefungen aufweist, deren Formen komplementär zur gewünschten Formen der Schleifkörner sind. Anschliessend wird ein Teil der flüchtigen Komponente entfernt, so dass ein Vorprodukt mit der gewünschten Form entsteht. Das Vorprodukt wird dann aus der Giessform entnommen, kalziniert und schliesslich gesintert, so dass das fertige Schleifkorn entsteht.

Die mit diesem Verfahren hergestellten Schleifkörner weisen zwei gegenüberliegende Grundflächen auf, die im Wesentlichen die gleiche geometrische Form haben. Den Schleifkörnern wird eine längere Lebensdauer zugewiesen, da von den Schleifkörnern während des Schleifens ständig kleine Stücke abbrechen, so dass sich neue Schneideflächen ergeben. Die Schleifkörner schärfen sich hierdurch selbst. Von Schleifkörnern mit einer Grundfläche in Form eines Dreiecks, insbesondere eines gleichseitigen Dreiecks, wird vermutet, dass sich beim elektrostatischen Streuen etwa ein bis zwei Drittel so orientieren, dass eine Spitze von der Unterlagen weg weist, während sich weitere Schleifkörner so orientieren, dass die Spitze auf die Unterlage zu weist.

In einem in EP 615 816 beschriebenen alternativen Verfahren werden mittels Extrusion zunächst längliche, stangenförmige Vorprodukte erzeugt, die anschliessend in einzelne Schleifkörner zerteilt werden. Die stangenförmigen Schleifkörner können somit beispielsweise eine Zylinder- oder Prismenform aufweisen.

In der WO 2009/085841 wird ein weiteres Herstellungsverfahren beschrieben, bei dem das Vorprodukt in der Giessform unter Bedingungen getrocknet wird, die zum Brechen des Vorprodukts führen. Die Bruchstücke weisen zumindest teilweise Oberflächen und Kanten auf, die komplementär zu den entsprechenden Oberflächen und Kanten der Giessform sind und daher den durch die Giessform definierten Winkel aufweisen. Diese Oberflächen und Kanten liefern eine erhöhte Schneidfähigkeit. Die weiteren, durch das Brechen entstandenen Oberflächen und Kanten sind hingegen unregelmässig.

Die WO 2010/077495 offenbart Schleifkörner, die eine durchgehende oder eine nicht durchgehende Öffnung enthalten oder eine schalenartige Form aufweisen. Auch Herstellungsverfahren für derartige Schleifkörner sind dort beschrieben. Weitere Schleifkörner mit undefinierten Öffnungen sind in der WO 2010/077518 offenbart. Die WO 2010/077491 befasst sich ebenfalls mit Schleifkörnern mit einer schalenartigen Form.

Aus der WO 2010/077519 sind Schleifkörner bekannt, die zwei gegenüberliegende Hauptflächen und dazwischen verlaufende, zu den Hauptflächen geneigte Seitenflächen aufweisen. Die verschiedenen Seitenflächen eines Schleifkorns können unter verschiedenen Winkeln relativ zu den Hauptflächen geneigt sein.

Das Dokument WO 2011/068724 zeigt ebenfalls Schleifkörner, welche eine Grundseite und eine Spitze sowie dazwischen verlaufende geneigte Seitenflächen aufweisen. Ähnliche Schleifkornformen sind auch in der WO 2011/109188 beschrieben.

Das Dokument WO 2010/077509 befasst sich mit Schleifkörnern, die eine Oberfläche mit einer Vielzahl von Furchen aufweisen. Diese Furchen werden mit Hilfe von komplementären Graten an der Unterseite der Giessform erzeugt.

Die WO 2011/068714 zeigt pyramidenförmige Schleifkörner mit einer parallelogrammförmigen, insbesondere rhombischen, einer drachenförmigen und einer superelliptischen Grundfläche.

Die WO 2011/139562 offenbart Schleifkörner in Form von Tetraedern und Abwandlungen davon. Beispielsweise können die Seitenflächen konkav oder konvex ausgebildet sein, die Ecken des Tetraeders können abgestumpft sein, oder die Kanten können kurvenförmig sein.

Die in WO 2012/018903 beschriebenen Schleifkörner enthalten zwei oder mehr plattenförmige Abschnitte, welche unter einem Winkel zueinander angeordnet sind.

Bei dem in WO 2012/061016 beschriebenen Verfahren wird zunächst ein abrasives Gebilde hergestellt, welches Schleifkornvorprodukte enthält, die über zerbrechliche Stege miteinander verbunden sind. Nach dem Sintern werden die Schleifkörner voneinander getrennt, indem die Stege durchbrochen werden.

Alternativ können Schleifkörner definierter Form auch mit einem Siebdruckverfahren hergestellt werden. Dies beschreibt beispielsweise die WO 96/12776. Dabei wird eine dimensionsstabile Dispersion durch Öffnungen mit definierter Form auf ein Transportband geleitet und anschliessend gehärtet. Die Öffnungen können beispielsweise in einem beweglichen Endlosband enthalten sein.

Eine Weiterentwicklung des Siebdruckverfahrens ist in der WO 2011/087649 offenbart. Bei diesem Verfahren wird die Dispersion mit Hilfe eines Differenzdrucks durch die Öffnungen des Endlosbandes hindurchgedrückt. Bei geeigneter Wahl der Viskosität der Dispersion können mit diesem Verfahren Schleifkörner hergestellt werden, deren Querschnitt sich von einer ersten Hauptseite zu einer zweiten gegenüberliegenden Hauptseite verjüngt.

In der WO 2012/061033 werden Verfahren zum Herstellen von Schleifkörnern definierter Form mit Hilfe von Laserstrahlung beschrieben. Zudem sind weitere spezielle Formen von Schleifkörnern offenbart. Beispielsweise können die Schleifkörner ein Hauptelement und mindestens drei sich davon erstreckende, stangenförmige Elemente enthalten. Insbesondere kann das Schleifkorn die Form eines Kreuzes, eines Grossbuchstaben "T", eines Sternes oder eines griechischen Kleinbuchstaben "λ" haben.

Allgemein wird davon ausgegangen, dass Schleifkörner mit definierter Form in mehrerlei Hinsicht verbesserte Eigenschaften aufweisen: Haben die Schleifkörner bereits zum Beginn ihrer Herstellung eine definierte Form und Grösse, so entfällt ein anschliessender Sortierschritt, mit dem die Schleifkörner ansonsten in verschiedene Grössenfraktionen aufgeteilt werden müssten. Zudem bleiben die Formen und Grössen auch zwischen verschiedenen Produktionschargen nahezu unverändert, was die Schleifeigenschaften sehr gut reproduzierbar macht. Des Weiteren können die Schleifkörner beispielsweise einen erhöhten Gesamtabtrag leisten, eine längere Lebensdauer haben, eine gesteigerte Oberflächengüte der bearbeiteten Oberfläche erzeugen oder ein besser reproduzierbares Schleifergebnis liefern.

Dennoch weisen die aus dem Stand der Technik bekannten Schleifkörner eine Reihe von Nachteilen auf. Beispielsweise müssen viele der bekannten Schleifkörner beim Streuen auf einer Unterlage mit Hilfe eines elektrostatischen Feldes ausgerichtet werden, damit sie die gewünschte Schleifwirkung erzeugen können. So müssen etwa die aus US 5,201,916 bekannten dreieckigen Schleifkörner so ausgerichtet werden, dass eine der Spitzen von der Schleifmittel-Unterlage weg weist. Bei einer mechanischen, d. h. gravimetrischen Streuung würde sich eine Vielzahl der dreieckigen Schleifkörner flach auf die Unterlage legen, so dass keine oder eine nur sehr geringfügige Schleifwirkung erzielt werden könnte. Selbst wenn die aus US 5,201,916 bekannten dreieckigen Schleifkörner mit Hilfe eines elektrostatischen Feldes so ausgerichtet werden, dass eine Spitze von der Unterlage weg weist, so besteht noch immer die Gefahr, dass die Schleifkörner aufgrund der beim Bearbeiten einer Oberfläche auftretenden Kippkräfte aus dem Bindemittel herausbrechen können, was einen negativen Einfluss auf die Standzeit des Schleifwerkzeugs hat.

Es ist daher eine Aufgabe der vorliegenden Erfindung, die Nachteile des Standes der Technik zumindest teilweise zu beheben. Insbesondere soll also ein Schleifkorn bereitgestellt werden, welches auch mittels einer mechanischen Streuung mit einer möglichst hohen Wahrscheinlichkeit derart auf einer Schleifmittel-Unterlage platziert werden kann, dass es dort eine gewünschte Orientierung aufweist. Insbesondere soll ein Bereich des Schleifkorns von der Unterlage weg weisen, der in Kontakt mit einer zu bearbeitenden Oberfläche gelangen soll. Zudem soll das Schleifkorn insbesondere in dieser bevorzugten Orientierung stabiler gegenüber Kippkräften sein, die beim Bearbeiten einer Oberfläche entstehen können und die das Herausbrechen des Schleifkorns aus einem Bindemittel verursachen können.

Diese Aufgabe wird gelöst durch ein Schleifkorn mit definierter Form, welches einen Basiskörper mit einer Unterseite und einer gegenüberliegenden Oberseite und mindestens einen Aufsatzkörper mit einer Unterseite enthält, die auf der Oberseite des Basiskörpers angeordnet ist. Erfindungsgemässe verläuft die Aussenkontur der Unterseite des Aufsatzkörpers vollständig innerhalb der Aussenkontur der Oberseite des Basiskörpers.

Bei dem Basiskörper und dem mindestens einen Aufsatzkörper handelt es sich um gedachte Teilkörper, aus denen das gesamte Schleifkorn nur gedanklich zusammengesetzt ist. Dass das Schleifkorn mindestens zwei oder mehr solcher Teilkörper enthält, ist also nicht dahingehend zu verstehen, dass das Schleifkorn aus zwei oder mehr zunächst separat hergestellten Teilkörpern zusammengefügt wurde oder ist. Stattdessen sind die erfindungsgemässen Schleifkörner einstückig ausgebildet.

Zudem ist die obige Formulierung nicht so zu verstehen, dass die Oberseite des Basiskörpers vollständig an der Oberfläche des Schleifkorns liegt: Der Teil der Oberseite des Basiskörpers, auf dem der Aufsatzkörper angeordnet ist, ist nur eine gedankliche Fläche, welche im Inneren des Schleifkorns verläuft. Ebenso ist die gesamte Unterseite des Aufsatzkörpers eine rein gedankliche Fläche, welche mit dem genannten Teil der Oberseite des Basiskörpers übereinstimmt und im Inneren des Schleifkorns verläuft.

Da erfindungsgemäss die Aussenkontur der Unterseite des Aufsatzkörpers innerhalb der Aussenkontur der Oberseite des Basiskörpers verläuft, bildet der Übergangsbereich vom Basiskörper zum Aufsatzkörper eine Art von Stufe, welche die Aussenkontur der Unterseite des Aufsatzkörpers vollumfänglich umschliesst. Diese Form des Schleifkorns führt einerseits dazu, dass das Schleifkorn auch mittels einer mechanischen Streuung mit hoher Wahrscheinlichkeit derart auf einer Schleifmittel-Unterlage platziert wird, dass die Unterseite des Basiskörpers auf dieser Unterlage aufliegt. In dieser Orientierung weist der Aufsatzkörper von der Unterlage weg und erzeugt somit die Schleifwirkung. Zudem sorgt die erfindungsgemässe Form dafür, dass das Schleifkorn in dieser Orientierung stabil gegenüber Kippkräften ist, die beim Bearbeiten einer Oberfläche entstehen. Eine Gefahr eines Herausbrechens des Schleifkorns aus einem Bindemittel kann hindurch reduziert werden.

Zudem kann es in vielen Ausführungsformen vorteilhaft sein, wenn der oben genannte Übergangsbereich zwischen Basiskörper und Aufsatzkörper keine scharfe Kante bildet, da hierdurch ein unvorteilhafter Kraftfluss entstehen würde. Dieser könnte insbesondere im Falle der bevorzugten keramischen Schleifkörner zu einem vergleichsweise leichten Brechen in diesem Übergangsbereich führen. Stattdessen kann der Übergangsbereich zwischen Basiskörper und Aufsatzkörper beispielsweise eine Rundung und/oder eine Fase enthalten; auch diese Varianten sind von der Erfindung erfasst. Die Ausdehnung der Rundung oder der Fase, insbesondere die Ausdehnung in einer Ebene parallel zur Unterseite des Basiskörpers und/oder senkrecht zur Unterseite des Basiskörpers, kann bis zu 1/5 der Höhe des Aufsatzkörpers oder der unten definierten Höhe des Schleifkorns betragen. In einigen Ausführungsformen sollte die Ausdehnung der Rundung oder der Fase mindestens 1/20, bevorzugt mindestens 1/15 der Höhe des Aufsatzkörpers oder des Schleifkorns betragen. Zudem erlaubt eine Fase oder eine Rundung eine einfachere Entfernung eines Schleifkorn-Vorprodukts aus einer Giessform, beispielsweise in einem wie unten näher beschriebenen Verfahren.

Die Unterseite des Basiskörpers ist bevorzugt im Wesentlichen eben. Ein derartiges Schleifkorn kann besonders stabil an einer Schleifmittel-Unterlage fixiert werden. Es ist jedoch auch denkbar, dass die Basisfläche eine konkave und/oder eine konvexe Wölbung aufweist. Eine derartige Wölbung kann bei der weiter unten beschriebenen Herstellung des Schleifkorns entstehen.

Das Schleifkorn kann mehrere Aufsatzkörper aufweisen. Dabei können zwei oder mehr Aufsatzkörper derart auf der Unterseite des Basiskörpers angeordnet sein, dass die Aussenkontur der Unterseite jedes dieser Aufsatzkörper innerhalb der Aussenkontur der Oberseite des Basiskörpers verläuft. Alternativ oder zusätzlich ist es auch denkbar und liegt im Rahmen der Erfindung, dass ein erster Aufsatzkörper wie oben beschrieben auf der Oberseite des Basiskörpers angeordnet ist und ein zweiter Aufsatzkörper auf einer Oberseite des ersten Aufsatzkörpers angeordnet ist. Es sind dann also mehrere Aufsatzkörper übereinander gestapelt. In jeder dieser Varianten sind der Basiskörper und die Aufsatzkörper ebenfalls nur als gedachte Teilkörper zu verstehen; das Schleifkorn ist jeweils einstückig.

Die beschriebenen Effekte sind umso ausgeprägter, je weiter die Aussenkontur der Unterseite des Aufsatzkörpers innerhalb der Aussenkontur der Oberseite des Basiskörpers verläuft. Daher sollte bevorzugt jeder Punkt der Aussenkontur der Unterseite des Aufsatzkörpers einen Abstand von der Aussenkontur der Oberseite des Basiskörpers haben, der mindestens 1%, bevorzugt mindestens 2%, weiter bevorzugt mindestens 10%, noch weiter bevorzugt mindestens 20% und besonders bevorzugt mindestens 30% der unten definierten Höhe des Schleifkorns beträgt.

Die Form und die Grösse des Schleifkorns können etwa mit Hilfe eines Mikroskops bestimmt werden. Das erfindungsgemässe Schleifkorn kann eine Grösse im gesamten Grössenbereich aufweisen, der auch für herkömmliche Schleifkörner üblich ist. Üblicherweise führen Schleifkörner mit grösseren Grössen zu einem höheren Materialabtrag von einer bearbeiteten Oberfläche als kleinere Schleifkörner. Beispielsweise kann das Schleifkorn eine Höhe im Bereich von 100 µm bis 2000 µm haben. Diese Höhe kann experimentell mit Hilfe eines Mikroskops bestimmt werden. Sie wird verstanden als die Ausdehnung des Schleifkorns in einer Richtung senkrecht zur Unterseite des Basiskörpers.

Analog können dem Basiskörper und dem Aufsatzkörper jeweils eine Höhe zugeordnet werden, die ebenfalls als die Ausdehnung des jeweiligen Teilkörpers senkrecht zur Unterseite des Basiskörpers verstanden wird. Das Verhältnis aus der Höhe des Basiskörpers und der Höhe des Aufsatzkörpers kann im Bereich von 1:1 bis 1:8, bevorzugt von 1:2 bis 1:6, besonders bevorzugt von 1:4 bis 1:5 liegen. Höhenverhältnisse in diesem Bereich erlauben eine ausreichende Fixierung des Schleifkorns auf einer Schleifmittel-Unterlage und eine ausreichende Stabilität gegenüber Kippkräften, die bei der Bearbeitung einer Oberfläche auftreten können.

Eine geometrisch einfache Form ergibt sich, wenn der Basiskörper die Form eines Zylinders hat, dessen Grundfläche die Unterseite des Basiskörpers bildet und dessen Deckfläche die Oberseite des Basiskörpers bildet. Unter einem Zylinder wird hier und im Folgenden allgemein ein Körper verstanden, der von einer Grundfläche und einer Deckfläche sowie von einer Mantelfläche begrenzt wird. Die Grundfläche und die Deckfläche sind dabei bevorzugt im Wesentlichen eben und ebenfalls bevorzugt im Wesentlichen zueinander parallel. Die Mantelfläche wird durch eine Schar von zueinander im Wesentlichen zueinander parallelen Strecken gebildet. Wenn diese Strecken im Wesentlichen senkrecht zur Grundfläche und zur Deckfläche verlaufen, so ergibt sich ein gerader Zylinder. Schiefe Zylinder sind jedoch ebenso denkbar und liegen im Rahmen der Erfindung.

Die Aussenkontur der Grundfläche und der Deckfläche des Zylinders kann mindestens einen geradlinigen und/oder mindestens einen kurvenförmigen Abschnitt umfassen. Die Grundfläche und die Deckfläche können also nicht nur ein Kreis, sondern beispielsweise auch eine Ellipse oder ein Polygon sein. Sind die Grundfläche und die Deckfläche des Zylinders ein Polygon, so hat das Schleifkorn die Form eines Prismas. Das Polygon kann konvex sein oder mindestens eine überstumpfe Ecke aufweisen. Es kann beispielsweise ein Dreieck, insbesondere ein gleichschenkliges oder sogar ein gleichseitiges Dreieck, ein Viereck, insbesondere ein Parallelogramm oder sogar ein Rechteck oder sogar ein Quadrat, ein insbesondere reguläres Fünfeck oder ein insbesondere reguläres Sechseck sein.

Alternativ kann der Basiskörper auch die Form eines Kegelstumpfs haben, dessen Grundfläche die Unterseite des Basiskörpers bildet und dessen Deckfläche die Oberseite des Basiskörpers bildet. Ein Kegelstumpf wird hierbei allgemein als ein geometrischer Körper verstanden, der von einer im Wesentlichen ebenen Grundfläche, einer im Wesentlichen ebenen Deckfläche und einer Vielzahl von im Wesentlichen geraden Mantelstrecken begrenzt wird, wobei jeder Punkt der Aussenkontur der Grundfläche durch jeweils eine der Mantelstrecken mit einem gemeinsamen imaginären Punkt verbunden ist, der jedoch ausserhalb des Körpers und auf der der Grundfläche abgewandten Seite der Deckfläche liegt. Diese Definition ist also weder auf Kegelstümpfe mit kreisförmiger Grundfläche noch auf gerade Kegelstümpfe beschränkt. Insbesondere kann es sich bei dem Kegelstumpf um einen Pyramidenstumpf handeln, bei dem die Grundfläche von einem Polygon gebildet wird. Das Polygon kann konvex sein oder mindestens eine überstumpfe Ecke aufweisen. Es kann beispielsweise ein Dreieck, insbesondere ein gleichschenkliges oder sogar ein gleichseitiges Dreieck, ein Viereck, insbesondere ein Parallelogramm oder sogar ein Rechteck oder sogar ein Quadrat, ein insbesondere reguläres Fünfeck oder ein insbesondere reguläres Sechseck sein.

Auch mindestens einer der Aufsatzkörper kann die Form eines Zylinders oder eines Kegelstumpfs haben. Dieser Zylinder oder Kegelstumpf kann eines, mehrere oder sämtliche der Merkmale aufweisen, die oben im Zusammenhang mit dem Basiskörper beschrieben wurden. Insbesondere kann der Aufsatzkörper also die Form eines Quaders, eines geraden kreisförmigen Zylinders oder einer dreiseitigen Pyramide haben. Der Aufsatzkörper kann auch die Form eines Kegels aufweisen. Analog zur obigen Definition eines Kegelstumpfs ist auch der hier verwendete Begriff des Kegels weder auf kreisförmige Kegel noch auf gerade Kegel beschränkt. Insbesondere kann der Kegel also beispielsweise eine Pyramide sein, bei der die Grundfläche durch ein Polygon gebildet ist.

Der Basiskörper und/oder der Aufsatzkörper können auch jeweils eine Grundfläche und eine Deckfläche aufweisen, die gegeneinander verdreht sind, so dass beispielsweise der Basiskörper und/oder der Aufsatzkörper die Form eines verdrillten Kegelstumpfs, insbesondere eines verdrillten Pyramidenstumpfs, oder eines verdrillten Prismas aufweist. Der Aufsatzkörper kann auch die Form eines verdrillten Kegels, insbesondere einer verdrillten Pyramide, aufweisen. Der Verdrillwinkel zwischen der Unterseite und der Oberseite des Basiskörpers und/oder des Aufsatzkörpers kann im Bereich von 20° bis 180° liegen und beispielsweise 45° betragen.

Ein verdrillter Basiskörper kann besser in einem auf einer Schleifmittel-Unterlage aufgetragenen Grundbinder verankert werden. Eine solche Verankerung ist besonders wirkungsvoll, wenn der Verdrillwinkel etwa 45° beträgt. In diesem Falle stehen nämlich die Ecken der Unterseite des Basiskörpers unter der Oberseite des Basiskörpers hervor. Ein verdrillter Aufsatzkörper kann dazu beitragen, dass die von einer bearbeiteten Oberfläche abgetragenen Späne wie mit einem Bohrer von der Oberfläche weggeführt werden, was die Wärmeentwicklung reduzieren kann. Zudem verdreht sich die in Kontakt mit einer bearbeiteten Oberfläche stehende Querschnittsfläche eines verdrillten Aufsatzkörpers, wenn dieser nach und nach abgetragen wird. Selbst wenn also ein Schleifwerkzeug mit dem erfindungsgemässen Schleifkorn immer nur entlang einer einzigen Richtung relativ zur bearbeiteten Oberfläche bewegt wird, so verändert sich mit der Zeit dennoch die Schleifwirkung, was in einigen Fällen vorteilhaft sein kann. Insbesondere kann während des Abtragens mindestens einmal eine ideal ausgerichtete Schneidkante mit einer bearbeiteten Oberfläche in Kontakt kommen.

Die Formen des Basiskörpers und des Aufsatzkörpers können unabhängig voneinander gewählt werden. So ist es beispielsweise denkbar, dass der Basiskörper ein Quader ist und der Aufsatzkörper eine dreiseitige Pyramide.

Das Schleifkorn kann ebene und/oder konkav gewölbte und/oder konvex gewölbte Oberflächenbereiche aufweisen. Dabei können mehrere Oberflächenbereiche auch verschiedene Wölbungen aufweisen.

Alternativ oder zusätzlich kann das Schleifkorn auch mindestens eine Öffnung aufweisen, die als Sackloch oder als durchgehende Öffnung ausgebildet sein kann. Bevorzugt kann diese Öffnung im Aufsatzkörper enthalten sein, insbesondere an einem dem Basiskörper abgewandten Ende des Aufsatzkörpers. Eine solche Öffnung bildet weitere Kanten. Dies resultiert in einer besonderen Schärfe des Schleifkorns, die wiederum einen deutlich erhöhten Materialabtrag erlaubt. Insbesondere kann die Öffnung auch als Flüssigkeitsreservoir oder zur Aufnahme von Schmiermittel dienen. Durch die Öffnung verringert sich auch der Querschnitt des Schleifkorns, der an einer zu bearbeitenden Oberfläche angreift.

Bei der oben beschriebenen Form des Schleifkorns handelt es sich um eine Idealisierung. Die Erfindung umfasst jedoch auch Schleifkörner, welche im Rahmen der Herstellungstoleranzen von dieser idealisierten Form abweichen. Mögliche Abweichungen von der idealisierten Form können eine oder mehrere der folgenden Ursachen haben:
- Hohlräume oder Bläschen aufgrund eingeschlossener Luft und/oder anderer Gase in einer Dispersion, aus der die Schleifkörner hergestellt werden;
- fehlende Ecken und/oder Kanten, welche durch ein nicht komplettes Ausfüllen einer Giessform und/oder während eines Entfernens eines Vorprodukts des Schleifkorns aus einer Giessform entstehen;
- eingefallene Seitenflächen und/oder Kanten, die durch ein Schrumpfen während des Entfernens eines Teiles der flüchtigen Komponenten der Dispersion entstehen; insbesondere eingefallene Flächen, die aus der oberen freien, nicht in Kontakt mit der Giessform stehenden Fläche der Dispersion entstehen;
- Abplatzungen, welche durch einen Trocken- und/oder einen Sinterprozess hervorgerufen werden;
- abgebrochene Ecken und/oder Kanten, welche durch einen Transport und/oder während einer Weiterverarbeitung der Schleifkörner als Schüttgut entstehen.

Die Abweichungen von der Idealisierung müssen nicht zwangsläufig zu nachteiligen Eigenschaften des Schleifkorns führen. Beispielsweise können abgebrochene Ecke und/oder Kanten auch bewirken, dass gegenüber der Idealisierung weitere Schneidkanten entstehen, die die Schleifwirkung sogar positiv beeinflussen können.

Insbesondere umfasst die Erfindung auch Schleifkörner, deren Form nur im Wesentlichen mit der idealisierten Form übereinstimmt. Beispielsweise wird die Unterseite des Basiskörpers auch dann als im Wesentlichen eben verstanden, wenn sie gewölbt ist und Krümmungsradien aufweist, die mindestens das Doppelte, bevorzugt mindestens das Fünffache, besonders bevorzugt mindestens das Zehnfache der Höhe des Schleifkorns betragen. Zudem wird der Basiskörper oder ein Aufsatzkörper auch dann als Zylinder, Kegel oder Kegelstumpf angesehen, wenn die Mantellinien zumindest teilweise oder sogar vollständig kurvenförmig sind und einen Krümmungsradius aufweisen, der mindestens das Doppelte, bevorzugt mindestens das Fünffache, besonders bevorzugt mindestens das Zehnfache der Höhe des Schleifkorns beträgt. Bevorzugt weist das Schleifkorn aber eine wie oben beschriebene idealisierte Form auf.

Das Schleifkorn kann beispielsweise ein keramisches Material, insbesondere ein polykristallines keramisches Material, enthalten oder daraus bestehen. Bevorzugt enthält das Schleifkorn Aluminiumoxid, besonders bevorzugt α-Al₂O₃.

Alternativ oder zusätzlich kann das Schleifkorn auch noch mindestens ein weiteres Metalloxid enthalten, wie etwa Natriumoxid, Magnesiumoxid, Eisenoxid, Siliziumoxid, Kalziumoxid, Zirkonoxid, Yttriumoxid, Zinkoxid, Kobaltoxid, Nickeloxid, Hafniumoxid, Chromoxid, Praseodymoxid, Samariumoxid, Ytterbiumoxid, Neodymoxid, Lanthanoxid, Gadoliniumoxid, Ceroxid, Dysprosiumoxid, Erbiumoxid, Lutetiumoxid, Titanoxid, Manganoxid oder beliebige Kombinationen davon.

Viele dieser Metalloxide stammen von Verunreinigungen in den Ausgangsrohstoffen, wie beispielsweise in Aluminiumoxid. Bei ausreichend geringen Anteilen im Schleifkorn haben solche Verunreinigungen jedoch keinen negativen Einfluss auf die Herstellung und die Anwendung des Schleifkorns. Einige der genannten Verunreinigungen können sogar einen positiven Effekt auf das Schleifkorn haben.

Anteile von Zirkonoxid oder Yttriumoxid können beispielsweise von Mahlkugeln stammen, die in einem Mahlschritt bei der Herstellung der Schleifkörner verwendet werden können. Anteile von Eisenoxid können aus einem Mahlbehälter stammen, der bei einem solchen Mahlschritt verwendet wird.

Ebenfalls alternativ oder zusätzlich kann das Schleifkorn weitere Hartstoffe enthalten, wie beispielsweise Siliziumkarbid.

Weiterhin kann das Schleifkorn mindestens ein Zersetzungsprodukt eines unten näher beschriebenen Dispergators enthalten, der bei der Herstellung der Schleifkörner verwendet wurde. Ferner kann das Schleifkorn mindestens einen Keimbildner oder dessen Zersetzungsprodukt enthalten, welches bei der Herstellung der Schleifkörner verwendet wurde. Bei dem Keimbildner kann es sich beispielsweise um das oben bereits erwähnte Magnesiumoxid handeln. Zudem kann das Schleifkorn auch mindestens einen der weiteren in der EP 615 816 A1 beschriebenen Stoffe enthalten.

Die genannten Inhaltsstoffe können mit Hilfe von an sich bekannten chemischen Analyseverfahren bestimmt werden.

Das Schleifkorn kann ein Gefüge mit einer oder mehreren verschiedenen Phasen enthalten oder daraus bestehen. Dabei kann eine erste Phase aus Aluminiumoxid, besonders bevorzugt aus α-Al₂O₃ bestehen. Eine zweite Phase kann aus einem oder mehreren der oben genannten weiteren Metalloxide und/oder weiteren Hartstoffe bestehen.

Der Anteil an Aluminiumoxid, insbesondere an α-Al₂O₃, im Schleifkorn kann beispielsweise mindestens 25 Gew.-%, bevorzugt mindestens 50 Gew.-%, weiter bevorzugt mindestens 70 Gew.-%, besonders bevorzugt mindestens 95 Gew.-% betragen.

Das Schleifkorn kann eine Beschichtung aufweisen, welche nur einen Teil der Oberfläche bedeckt, insbesondere nur eine oder mehrere Kanten und/oder nur einen von mehreren flächigen Bereichen der Oberfläche. Bei der Beschichtung kann es sich etwa um eine ferromagnetische oder eine paramagnetische Beschichtung handeln. Eine solche teilweise Beschichtung der Oberfläche mit einem ferromagnetischen oder einem paramagnetischen Material ermöglicht es, das Schleifkorn in einem während des Streuens angelegten Magnetfeld in einer vorgegebenen Richtung auszurichten. Alternativ kann es sich auch um eine Beschichtung aus einem Material mit einer erhöhten Wärmeleitfähigkeit handeln oder um eine Beschichtung, welche eine erhöhte Adhäsion des Schleifkorns auf der Schleifmittel-Unterlage ermöglicht.

Ein weiterer Aspekt der Erfindung betrifft eine Gesamtheit von Schleifkörnern. Unter einer Gesamtheit von Schleifkörnern wird hier und im Folgenden eine zusammengehörige Ansammlung von Schleifkörnern verstanden. Beispielsweise kann es sich dabei um eine Ansammlung von Schleifkörnern handeln, die in einem Gebinde enthalten und so gelagert und/oder transportiert werden, beispielsweise in einem Sack.

Eine solche Ansammlung von Schleifkörner kann zur Herstellung eines Schleifartikels verwendet werden. Als Gesamtheit von Schleifkörnern wird auch die Gesamtheit aller in einem Schleifartikel vorhandenen Schleifkörner angesehen.

Bevorzugt enthält die Gesamtheit von Schleifkörnern mindestens 20 Gew.-%, bevorzugt mindestens 50 Gew.-%, besonders bevorzugt mindestens 90 Gew.-% erfindungsgemässe Schleifkörner, so wie sie oben beschrieben wurden. Die übrigen in der Gesamtheit enthalten Schleifkörner können ebenfalls eine definierte Form aufweisen, welche jedoch von der erfindungsgemässen Form abweicht, oder sie können keine definierte Form aufweisen, da es sich beispielsweise um gebrochene Schleifkörner handelt. Diese übrigen in der Gesamtheit enthalten Schleifkörner werden auch als "Stützkörner" bezeichnet.

Es ist denkbar und liegt im Rahmen der Erfindung, dass die in der Gesamtheit enthaltenen erfindungsgemässen Schleifkörner voneinander verschieden ausgebildet sind. So kann die Gesamtheit von Schleifkörnern beispielsweise einen ersten Anteil von Schleifkörnern einer ersten erfindungsgemässen Ausführungsform enthalten sowie einen zweiten Anteil von Schleifkörnern einer zweiten erfindungsgemässen Ausführungsform, die von der ersten erfindungsgemässen Ausführungsform verschieden ist. Insbesondere können sich die Schleifkörner der ersten erfindungsgemässen Ausführungsform in ihrer Grösse und/oder in ihrer Form von den Schleifkörnern der zweiten erfindungsgemässen Ausführungsform unterscheiden.

Die Gesamtheit von Schleifkörnern kann ausschliesslich aus identischen erfindungsgemässen Schleifkörnern bestehen; insbesondere hat die Gesamtheit dann eine punktförmige Grössenverteilung.

Die Gesamtheit von Schleifkörnern kann im Wesentlichen eine Grössenverteilung aufweisen, die einem in der Schleifmittelindustrie üblichen Grössenstandard entspricht, beispielsweise dem American National Standards Institute (ANSI), den Standards der Federation of European Producers of Abrasives (FEPA) oder dem Japanese Industrial Standard (JIS). Beispielsweise kann die Gesamtheit der Schleifkörner im Wesentlichen eine Körnung P12, P16, P20, P24, P30, P36, P40, P50, P60, P80, P100, P120, P150, P180, P220, P240, P280, P320, P360, P400, P500, P600, P800, P1000, P1200, P1500, P2000, P2500, P3000 oder P5000 gemäss dem FEPA-Standard aufweisen. Dabei bedeutet eine Grössenverteilung "im Wesentlichen", dass zumindest 90 Gew.-%, bevorzugt mindestens 95 Gew.-%, weiter bevorzugt mindestens 99 Gew.-% und besonders bevorzugt sämtliche Schleifkörner der Gesamtheit von Schleifkörnern diesen Standard erfüllen.

Wie oben bereits beschrieben wurde, ist es auch denkbar, dass die Gesamtheit mindestens zwei verschiedene Anteile erfindungsgemässer Schleifkörner und/oder mindestens einen Anteil nicht erfindungsgemässer Schleifkörner enthält. Jeder dieser Anteile kann für sich eine Grössenverteilung aufweisen, die jeweils einem der oben genannten, in der Schleifmittelindustrie üblichen Grössenstandards entspricht.

Ein erfindungsgemässes Schleifkorn oder eine erfindungsgemässe Gesamtheit von Schleifkörnern kann beispielsweise mit dem folgenden, aus US 5,201,916 bekannten Verfahren hergestellt werden:
a) Herstellung oder Bereitstellung einer Dispersion, enthaltend α-Aluminiumoxid-Partikel und/oder Partikel, welche in α-Aluminiumoxid umwandelbar sind, sowie mindestens ein flüchtiges Dispersionsmittel, bevorzugt Wasser;
b) Einfüllen der Dispersion in mindestens eine Vertiefung einer Giessform;
c) optional Abrakeln einer Oberseite der Giessform, um zumindest einen Teil der Dispersion zu entfernen, der über die Oberseite der Giessform übersteht;
d) Entfernen eines Teiles der flüchtigen Komponenten der Dispersion, so dass mindestens ein Schleifkorn-Vorprodukt entsteht;
e) Entfernen des Schleifkorn-Vorprodukts aus der Giessform;
f) optional Kalzinieren des Schleifkorn-Vorprodukts;
g) Sintern des Schleifkorn-Vorprodukts, um mindestens ein Schleifkorn zu erhalten.

Vor und/oder während der Herstellung der Dispersion im Schritt a) können die Rohstoffe, insbesondere α-Aluminiumoxid-Partikel und/oder Partikel, welche in α-Aluminiumoxid umwandelbar sind, gemahlen werden. Dies kann beispielsweise mit Hilfe einer Kugelmühle erfolgen, insbesondere mit Hilfe einer Planetenkugelmühle.

Die Dispersion kann mindestens einen Dispergator enthalten. Ein solcher Dispergator erleichtert die Bildung der Dispersion und erhöht ihre Stabilität, indem er beispielsweise Schichten um die einzelnen Körner herum bildet, die das Zusammenklumpen verhindern. Bei dem Dispergator kann es sich beispielsweise um ein Polymer handeln. In der Regel zersetzt sich der Dispergator spätestens während des Sinterns im Schritt g).

Zum Herstellen der erfindungsgemässen Schleifkörner kann ein Giesswerkzeug verwendet werden, wobei das Giesswerkzeug mindestens eine Giessform umfasst, die mindestens eine Vertiefung mit einer jeweiligen Oberfläche aufweist, wobei die Oberfläche komplementär zur Form zumindest eines Teils der Oberfläche des Schleifkorns ist.

Die Giessform kann beispielsweise Silikon enthalten oder daraus bestehen. Die Vertiefungen können eine offene Deckfläche aufweisen, durch die die Dispersion eingefüllt werden kann. Die Vertiefungen der Giessform weisen jeweils eine Oberfläche auf, deren Form komplementär zur Form zumindest eines Teils der Oberfläche des gewünschten Schleifkorns ist. Bevorzugt weisen die Vertiefungen der Giessform jeweils eine Oberfläche auf, deren Form komplementär zur Form des Teils der Oberfläche des Schleifkorns ist, der nicht die Unterseite des Basiskörpers des Schleifkorns bildet. Diese Unterseite kann dann aus der oberen freien, nicht in Kontakt mit der Giessform stehenden Fläche der Dispersion entstehen. Aufgrund des Schrumpfens während des Schritts d) ist es möglich, dass die Unterseite nicht vollständig eben ist, sondern eine geringfügige Wölbung aufweist.

Das im Schritt d) entstehende Vorprodukt sollte bevorzugt mechanisch stabil genug sein, um in den nachfolgenden Schritten als Schüttgut weiterverarbeitet werden zu können. Das optionale Kalzinieren in Schritt f) ist insbesondere dann vorteilhaft oder sogar erforderlich, wenn die Dispersion mehrere verschiedene Rohstoffe enthält und eine Phasenumwandlung erforderlich ist.

Noch ein Aspekt der Erfindung betrifft einen Schleifartikel, welcher eine wie oben beschriebene Gesamtheit von Schleifkörnern enthält. Insbesondere können also mindestens 20 Gew.-%, bevorzugt mindestens 50 Gew.-%, besonders bevorzugt mindestens 90 Gew.-% aller Schleifkörner des Schleifartikels als erfindungsgemässe Schleifkörner ausgebildet sein, so wie sie oben beschrieben wurden. Die übrigen Schleifkörner können ebenfalls eine definierte Form aufweisen, welche jedoch von der erfindungsgemässen Form abweicht, oder sie können keine definierte Form aufweisen.

Bei dem Schleifartikel kann es sich beispielsweise um einen beschichteten Schleifartikel (englisch: "coated abrasive"), einen Vliesschleifartikel, um einen gebundenen Schleifartikel (englisch: "bonded abrasive") oder um eine Schleifbürste handeln.

Ein beschichteter Schleifartikel enthält eine insbesondere flexible Unterlage, wie beispielsweise Papier, Vulkanfiber, eine Folie, ein textiles Material, einen Schaumstoff oder mehrschichtige Kombinationen davon. Die Schleifkörner können mit Hilfe eines Grundbinders (englisch: "make coat") an der Unterlage befestigt sein. Der Grundbinder und die Schleifkörner können mit einem Deckbinder (englisch: "size coat") überdeckt sein. Optional kann oberhalb des genannten Deckbinders auch noch ein zweiter Deckbinder vorhanden sein (englisch: "supersize coat").

Als Grundbinder, Deckbinder und zweiter Deckbinder können sämtliche an sich bekannte Bindemittel eingesetzt werden, beispielsweise aus Kunstharz, wie etwa einem Phenolharz, einem Epoxid, einem Harnstoffharz, einem Melaminharz oder einem ungesättigten Polyesterharz. Der Deckbinder und/oder der zweite Deckbinder können zudem weitere übliche Wirkstoffe und/oder Füllstoffe enthalten.

Der Schleifartikel kann in unterschiedlichen Konfektionsformen vorliegen, beispielsweise als Schleifscheibe oder als Schleifband.

Die Erfindung umfasst auch ein Verfahren zum Herstellen eines wie oben beschriebenen erfindungsgemässen Schleifartikels. Das Verfahren enthält einen Schritt, in dem eine Gesamtheit von Schleifkörnern an und/oder in einem Substrat fixiert wird, insbesondere mittels eines Bindemittels. Bei dem Substrat kann es sich etwa um eine insbesondere flexible Unterlage eines beschichteten Schleifartikels, um ein Vliesmaterial eines Vliesschleifmittels, um eine Matrix eines gebundenen Schleifmittels oder um Borsten einer Schleifbürste handeln. Im Falle eines beschichteten Schleifartikels kann das Auftragen des Grundbinders und/oder der Schleifkörner und/oder des Deckbinders und/oder des zweiten Deckbinders mit einer an sich bekannten Methode erfolgen. Beispielsweise können die Schleifkörner elektrostatisch oder mechanisch (d. h. gravimetrisch) aufgetragen werden. Aufgrund der erfindungsgemässen Form der Schleifkörner wird auch beim mechanischen Streuen ein grosser Anteil der Schleifkörner so orientiert, dass die Unterseite des Basiskörpers auf der Schleifmittel-Unterlage zu liegen kommt. Der Aufsatzkörper weist dann von der Unterlage weg und kann eine Schleifwirkung entfalten. Auf eine aufwändigere elektrostatische Streuung kann also verzichtet werden.

Ferner richtet sich die Erfindung auch auf ein Verfahren zum Schleifen einer Oberfläche mit einem wie oben beschriebenen Schleifartikel. Bei der Oberfläche kann es sich insbesondere um eine lackierte Oberfläche handeln. Im Falle einer lackierten Oberfläche sind Schleifkörner mit Grössen von 500 µm oder weniger besonders geeignet.

Im Folgenden wird die Erfindung mit Hilfe mehrerer Ausführungsbeispiele und Zeichnungen näher erläutert. Dabei zeigen
Figur 1: eine erste Ausführungsform eines erfindungsgemässen Schleifkorns in einer perspektivischen Ansicht;
Figur 2: eine zweite Ausführungsform eines erfindungsgemässen Schleifkorns in einer perspektivischen Ansicht;
Figur 3: eine dritte Ausführungsform eines erfindungsgemässen Schleifkorns in einer perspektivischen Ansicht;
Figur 4: eine vierte Ausführungsform eines erfindungsgemässen Schleifkorns in einer perspektivischen Ansicht;
Figur 5: eine fünfte Ausführungsform eines erfindungsgemässen Schleifkorns in einer perspektivischen Ansicht;
Figur 6: eine sechste Ausführungsform eines erfindungsgemässen Schleifkorns in einer perspektivischen Ansicht;
Figur 7: eine siebte Ausführungsform eines erfindungsgemässen Schleifkorns in einer perspektivischen Ansicht;
Figur 8: eine seitliche Schnittansicht eines weiteren erfindungsgemässen Schleifkorns;
Figuren 9a bis g: mögliche Querschnittsflächen eines Basiskörpers oder eines Aufsatzkörpers eines erfindungsgemässen Schleifkorns entlang der Schnittlinie A-A bzw. B-B in Figur 8;
Figuren 10a bis h: mögliche Querschnittsflächen eines Aufsatzkörpers eines erfindungsgemässen Schleifkorns entlang der Schnittlinie C-C in Figur 8;
Figuren 11a bis d: vier Ansichten einer achten Ausführungsform eines erfindungsgemässen Schleifkorns;
Figur 12: eine neunte Ausführungsform eines erfindungsgemässen Schleifkorns in einer perspektivischen Ansicht;
Figuren 13a und b: weitere Ausführungsformen erfindungsgemässer Schleifkörner mit einer Rundung bzw. einer Fase in einer seitlichen Schnittansicht.

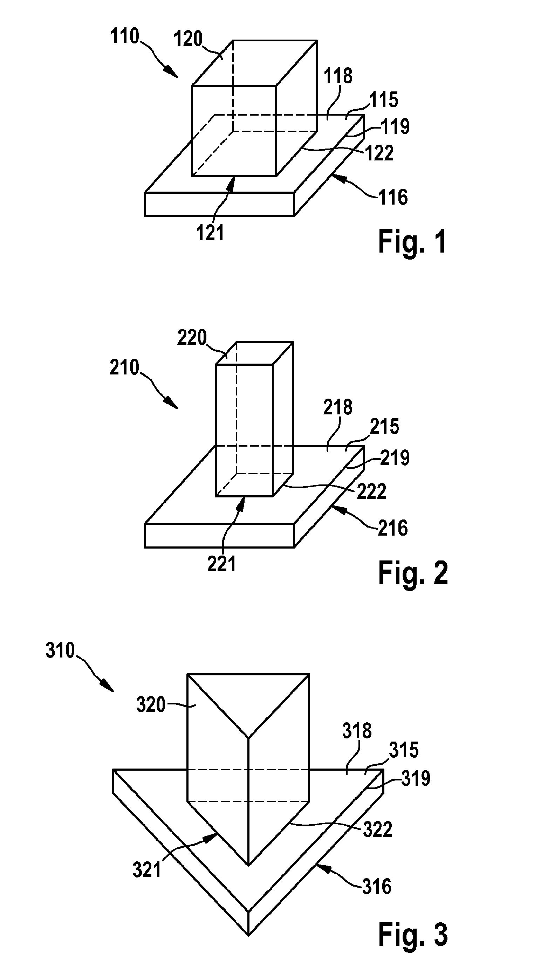

Die Figuren 1 bis 7 zeigen sieben erfindungsgemässe Schleifkörner 110, 210, 310, 410, 510, 610, 710. Diese enthalten jeweils einen Basiskörper 115, 215, 315, 415, 515, 615, 715 mit einer hier nicht erkennbaren Unterseite 116, 216, 316, 416, 516, 616, 716 und einer gegenüberliegenden Oberseite 118, 218, 318, 418, 518, 618, 718 und einen Aufsatzkörper 120, 220, 320, 420, 520, 620, 720 mit einer Unterseite 121, 221, 321, 421, 521, 621, 721, die auf der Oberseite 118, 218, 318, 418, 518, 618, 718 des Basiskörpers 115, 215, 315, 415, 515, 615, 715 angeordnet ist. Die Unterseite 121, 221, 321, 421, 521, 621, 721 des Aufsatzkörpers 120, 220, 320, 420, 520, 620, 720 weist eine Aussenkontur 122, 222, 322, 422, 522, 622, 722 auf, die vollständig innerhalb der Aussenkontur 122, 222, 322, 422, 522, 622, 722 der Oberseite 118, 218, 318, 418, 518, 618, 718 des Basiskörpers 115, 215, 315, 415, 515, 615, 715 verläuft. Damit ist im Übergangsbereich zwischen Basiskörper 115, 215, 315, 415, 515, 615, 715 und Aufsatzkörper 120, 220, 320, 420, 520, 620, 720 eine Stufe gebildet, die den Aufsatzkörper 120, 220, 320, 420, 520, 620, 720 vollumfänglich umschliesst.

Die Schleifkörner 110, 210, 310, 410, 510, 610, 710 enthalten nur gedanklich einen Basiskörpers 115, 215, 315, 415, 515, 615, 715 und einen Aufsatzkörper 120, 220, 320, 420, 520, 620, 720, wie oben erläutert wurde. Sie sind also tatsächlich einstückig ausgebildet.

Der Basiskörper 115, 215, 315, 415, 515, 615, 715 und der Aufsatzkörper 120, 220, 320, 420, 520, 620, 720 sind jeweils durch geometrische Grundformen gebildet. Die Basiskörper 115, 215, 315, 415, 515, 615, 715 haben alle die Form eines Zylinders im Sinne der hier verwendeten allgemeinen Definition. Die Basiskörper 115, 215, 615 und 715 haben die Form eines Quaders, also eines geraden Prismas mit einer rechteckigen Grundfläche. Der Basiskörper 315 ist ein gerades Prisma mit einer Grundfläche in Form eines gleichseitigen Dreiecks. Die Basiskörper 415 und 515 sind gerade Kreiszylinder.

Die Aufsatzkörper 120, 220, 310, 410, 510 und 710 sind ebenfalls gerade Prismen, wobei die Grundflächen der Aufsatzkörper 120 und 220 eine rechteckige Form haben und die Aufsatzkörper 320, 420 und 720 eine dreieckige Form haben. Der Aufsatzkörper 520 hat eine die Form eines geraden Kreiszylinders, und der Aufsatzkörper 620 hat die Form einer geraden Pyramide mit einer rechteckigen Grundfläche. Das Schleifkorn 710 weist noch einen weiteren Aufsatzkörper 725 in Form eines Kreiszylinders auf, der auf dem ersten Aufsatzkörper 720 angeordnet ist, das heisst auf der dem Basiskörper 715 abgewandten Seite des ersten Aufsatzkörpers 720.

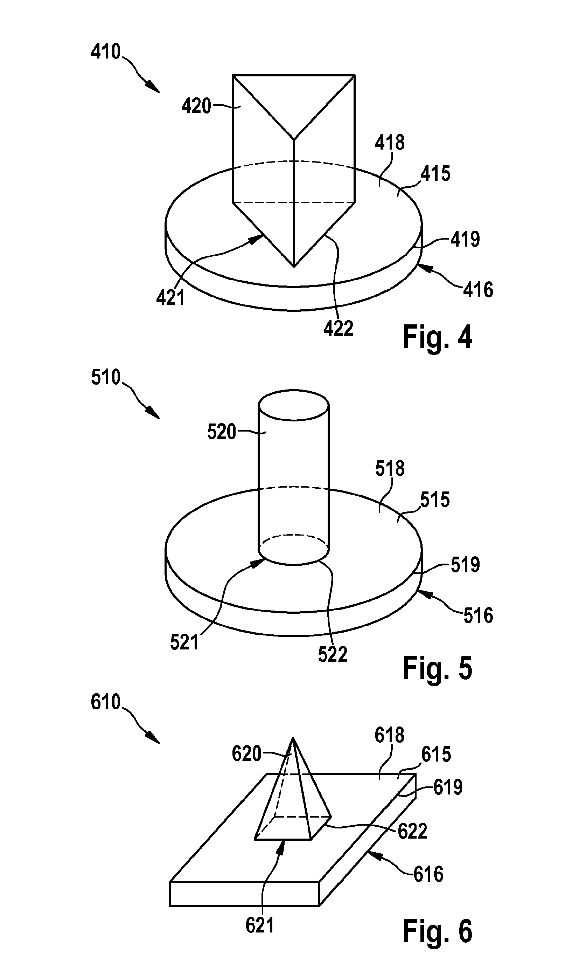

Abweichend von den hier dargestellten Ausführungsformen kann der Basiskörper natürlich auch als schiefes Prisma, als gerader oder schiefer Prismenstumpf oder als allgemeinerer Kegelstumpf ausgebildet sein. Natürlich sind auch Kombinationen der hier dargestellten Ausführungsformen möglich, wie beispielsweise aus einem Basiskörper 315 wie in Figur 3 und einer Pyramide 620 wie in Figur 6. Der Basiskörper und/oder der Aufsatzkörper können auch jeweils eine Grundfläche und eine Deckfläche aufweisen, die gegeneinander verdreht sind, so dass beispielsweise der Basiskörper und/oder der Aufsatzkörper die Form eines verdrillten Kegelstumpfs, insbesondere eines verdrillten Pyramidenstumpfs, oder eines verdrillten Prismas aufweist. Der Aufsatzkörper kann auch die Form eines verdrillten Kegels, insbesondere einer verdrillten Pyramide, aufweisen. Hierdurch können die bereits oben erläuterten Vorteile erreicht werden.

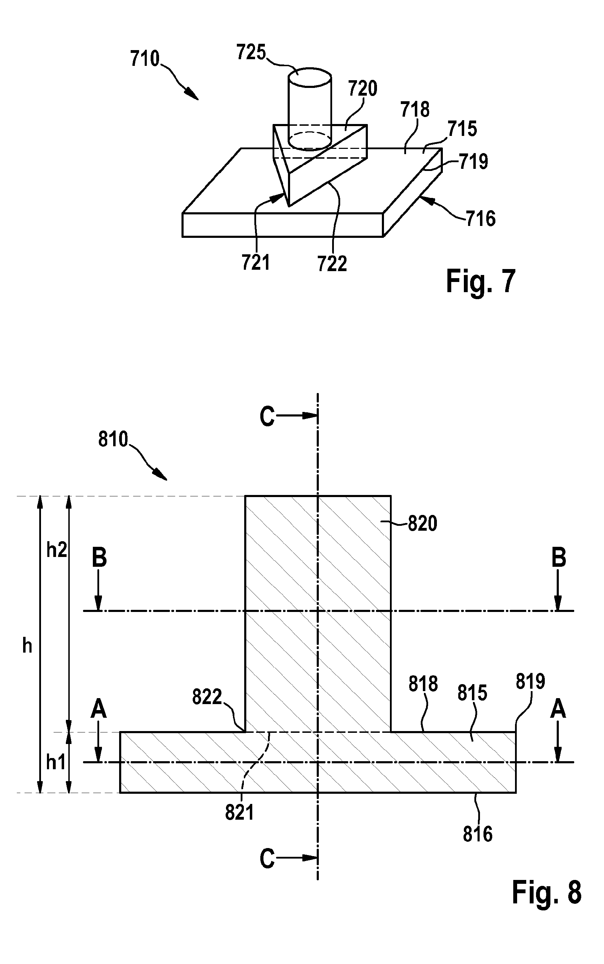

In Figur 8 ist eine seitliche Schnittansicht eines weiteren erfindungsgemässen Schleifkorns 810 dargestellt. Wie auch in dieser Schnittansicht zu erkennen ist, verläuft die Aussenkontur 822 der Unterseite 821 des Aufsatzkörpers 820 innerhalb der Aussenkontur 819 der Oberseite 818 des Basiskörpers 815. Die Unterseite 821 des Aufsatzkörpers 820 stimmt mit einem Teil der Oberseite 818 des Basiskörpers 815 überein. Diese Fläche, die im Inneren des Schleifkorns 810 verläuft, ist in Figur 8 gestrichelt dargestellt. Sie bildet keine tatsächliche Fläche oder Kante des Schleifkorns 810, sondern dient lediglich der gedanklichen Aufteilung des Schleifkorns 810 in einen Basiskörper 815 und einen Aufsatzkörper 820.

Wie beispielhaft in Figur 8 gezeigt ist, hat das Schleifkorn eine Höhe h; diese kann im Bereich von 100 µm bis 2000 µm liegen. Der Basiskörper 815 hat eine Höhe h1, und der Aufsatzkörper 820 hat eine Höhe h2. Das Verhältnis von h1 und h2 kann im Bereich von 1:1 bis 1:8 liegen. Beispielsweise könnte h1=0,3 mm und h2=1,2 mm sein. Ein derartiges Höhenverhältnis sorgt einerseits für eine grosse Wahrscheinlichkeit, dass ein mechanisch gestreutes Schleifkorn derart auf einer Schleifmittel-Unterlage platziert wird, dass es mit der Unterseite des Basiskörpers auf der Unterlage zu liegen kommt. Andererseits sorgt ein solches Höhenverhältnis für eine stabile Fixierung des Schleifkorns in dieser Orientierung.

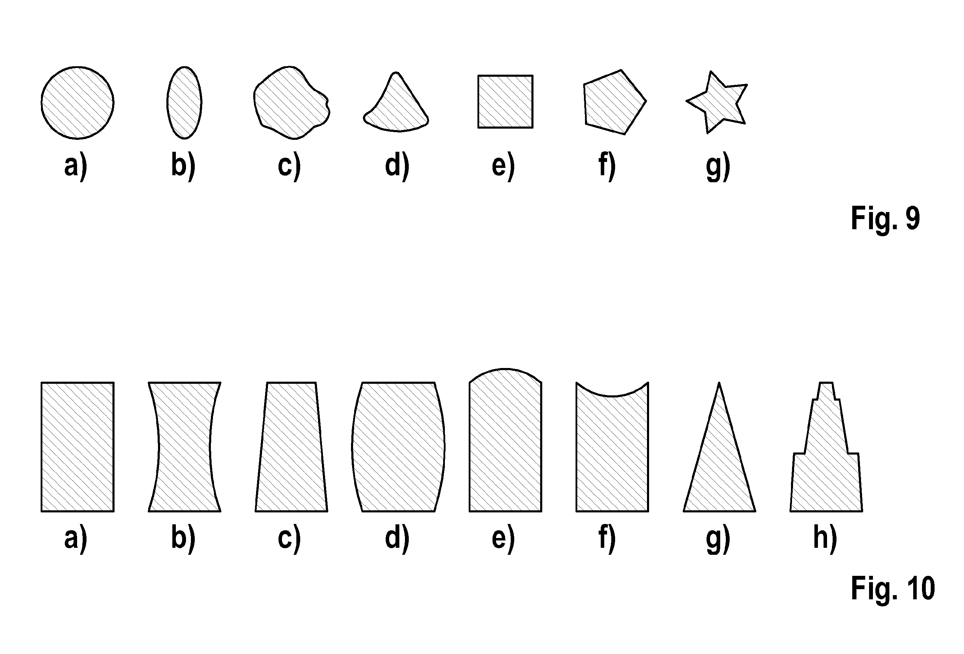

In Ebenen A-A und B-B senkrecht zur Unterseite 816 des Basiskörpers 815 können der Basiskörper 815 bzw. der Aufsatzkörper 820 verschiedene Querschnitte haben. Einige mögliche Querschnitte sind in den Figuren 9a bis 9g dargestellt. Sie können Querschnitt des Basiskörpers 815 und/oder des Aufsatzkörpers 820 auftreten. Figur 9a zeigt einen Kreis, Figur 9b eine Ellipse, Figur 9e ein Rechteck, Figur 9f ein regelmässiges Fünfeck und Figur 9g einen fünfzackigen Stern. Es können aber auch unregelmässigere Querschnitte auftreten, wie in den Figuren 9c und 9d dargestellt ist. Derartige Abweichungen von den idealisierten Formen können beispielsweise aufgrund von Herstellungstoleranzen entstehen, insbesondere bei dem oben beschriebenen Herstellungsverfahren. Natürlich ist es denkbar, dass der Basiskörper 815 einen der Querschnitte aus den Figuren 9a bis 9g aufweist und der Aufsatzkörper 820 einen der anderen Querschnitte aus diesen Figuren. Die Querschnitte können auch verschiedene Grössen haben und derart sein, dass sie durch eine Streckung ineinander überführbar sind.

Die Figuren 10a bis 10h zeigen mögliche Querschnitte eines Aufsatzkörpers 820 entlang eines Teils der Schnittlinie C-C in Figur 8. So kann die Aussenkontur in dieser Querschnittsfläche gerade, konvex gekrümmte oder konkav gekrümmte Abschnitte aufweisen.

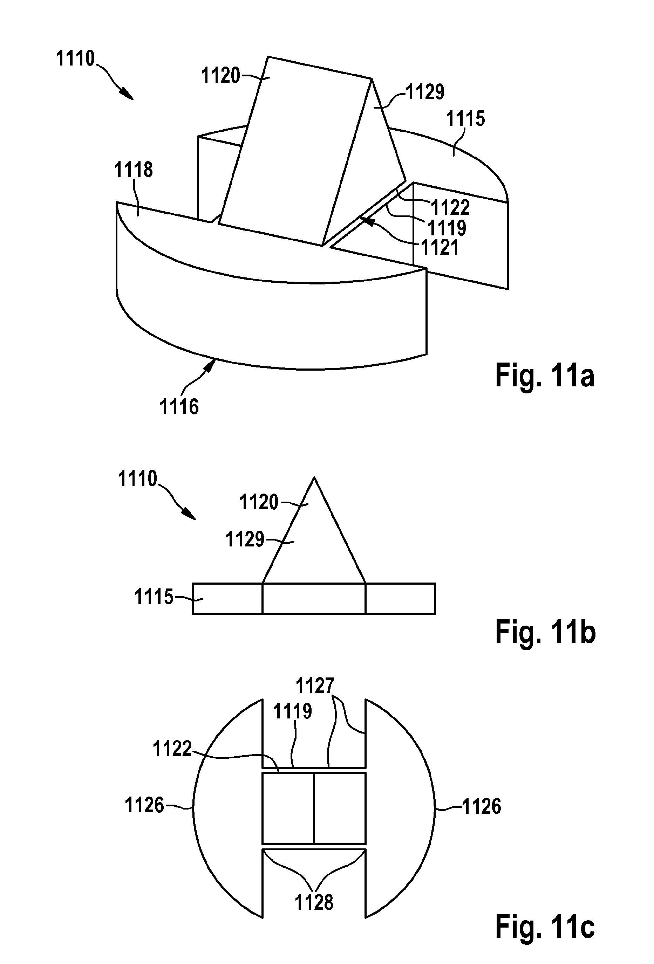

Noch eine weitere Ausführungsform eines erfindungsgemässen Schleifkorns 1110 ist in den Figuren 11a bis 11d dargestellt. Dieses Schleifkorn 1110 enthält ebenfalls einen Basiskörper 1115 in Form eines Prismas. Die Aussenkontur 1119 der Basisfläche 1116 enthält zwei Kreisbogenabschnitte 1126 und sechs geradlinige Abschnitte 1127. Zudem enthält die Aussenkontur 1119 vier überstumpfe Winkel 1128, wie am besten in der Draufsicht gemäss Figur 11c zu erkennen ist. Dieser Figur ist auch zu entnehmen, dass die Aussenkontur 1122 des Aufsatzkörpers 1120 erfindungsgemäss vollständig innerhalb der Aussenkontur 1119 des Basiskörpers 1115 verläuft.

Der Aufsatzkörper 1120 hat die Form eines Prismas mit einer Grundfläche 1129 in Gestalt eines gleichseitigen Dreiecks. Im Gegensatz zu den in den Figuren 3 und 4 dargestellten Ausführungsformen bildet hier jedoch nicht die Grundfläche 1129, sondern eine Seitenfläche des Prismas die Unterseite 1121 des Aufsatzkörpers 1120, die auf der Oberseite 1118 des Basiskörpers 1115 angeordnet ist.

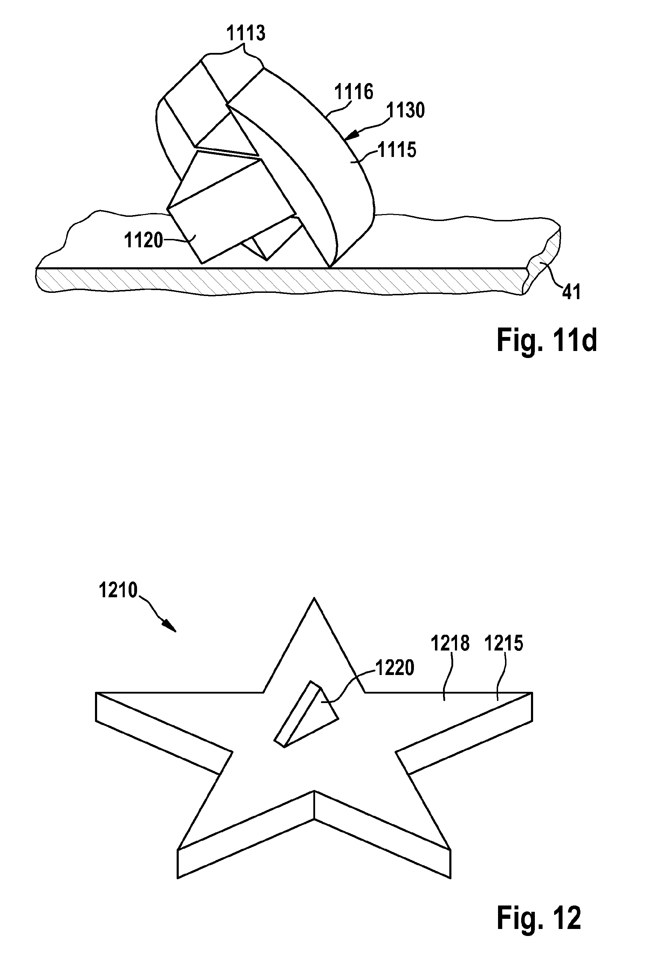

Mit geringer Wahrscheinlichkeit kann es beim mechanischen Streuen dennoch passieren, dass das Schleifkorn 1110 nicht mit der Unterseite 1116 seines Basiskörpers 1115 auf einer Unterlage 41 zu liegen kommt, wie in Figur 11d schematisch gezeigt ist. Trotzdem sorgen in diesem Falle die Ecken 1131 in der Aussenkontur 1130 der Unterseite 1116 für eine Schleifwirkung.

Schliesslich zeigt die Figur 12 noch eine weitere Ausführungsform eines erfindungsgemässen Schleifkorns 1210. Dessen Basiskörper 1215 hat die Form eines Prismas mit einer Grundfläche in Gestalt eines fünfzackigen Sterns. Auf der Oberseite 1218 des Basiskörpers 1215 ist ein Aufsatzkörper 1220 angeordnet, der die Form eines dreieckigen Prismas hat.

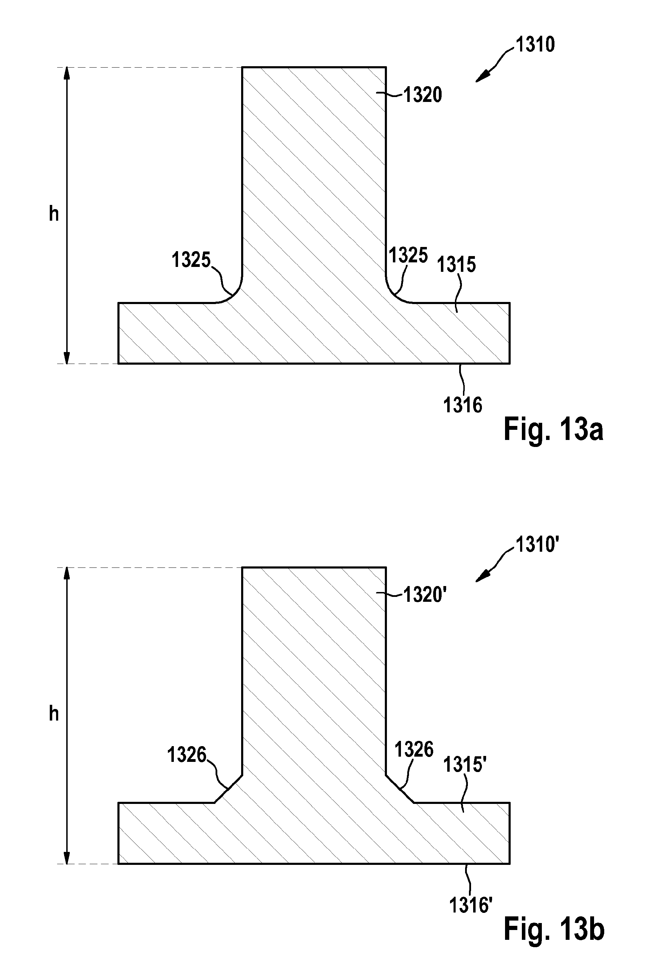

Die Figuren 1 bis 8, 11a bis 11d und 12 zeigen in geometrischer Hinsicht idealisierte Formen, bei denen im Übergangsbereich vom Basiskörper zum Aufsatzkörper eine scharfe Kante gebildet ist. Wie jedoch oben erläutert wurde, können derart scharfe Kanten insbesondere bei den bevorzugten keramischen Schleifkörnern zu einem Bruch an dieser Kante führen. Daher ist es aus technischer Sicht in vielen Ausführungsformen bevorzugt, wenn in dem genannten Übergangsbereich keine scharfe Kante vorliegt, sondern eine wie in Figur 13a dargestellt Rundung 1325 oder eine in Figur 13b dargestellte Fase 1326. Die Ausdehnung dieser Rundung 1325 oder Fase 1326 sowohl in einer Ebene parallel zur Unterseite 1316, 1316' des jeweiligen Basiskörpers 1315, 1315' als auch senkrecht zu dieser Unterseite 1316, 1316' liegt bevorzugt im Bereich von 1/20 bis 1/5, bevorzugt von 1/15 bis 1/5 der Höhe des Aufsatzkörpers 1320, 1320' oder des Schleifkorns 1310, 1310'.

Die erfindungsgemässen Schleifkörner können beispielsweise mit einem im Folgenden beschriebenen Verfahren hergestellt werden: Zunächst wird eine Dispersion aus 200 g α-Al₂O₃, 0,4 g MgO, 90 g Wasser als Dispersionsmittel und 0,5 g Dispergator hergestellt. Das MgO fungiert dabei als Keimbildner. Als Dispergator kann beispielsweise das Produkt Dolapix CE64, erhältlich von Zschimmer & Schwarz, 56108 Lahnstein, Deutschland eingesetzt werden. Die somit erhaltene Dispersion wird für 30 Minuten bei 200 Umdrehungen pro Minute in einer Planetenkugelmühle gemahlen, beispielsweise einer Planetenkugelmühle PM400, erhältlich von der Retsch GmbH, 42781 Haan, Deutschland. Anschliessend wird die gemahlene Dispersion in eine Giessform aus Silikon eingefüllt, die Vertiefungen in der Form der gewünschten Schleifkörner enthält. Daraufhin wird die flüchtige Komponente, also das Wasser, aus der Dispersion entfernt. Hierdurch entsteht ein Schleifkorn-Vorprodukt, welches aus der Giessform entfernt wird. Die Unterseite des Basiskörpers des Schleifkorns kann dann aus der oberen freien, nicht in Kontakt mit der Giessform stehenden Fläche der Dispersion entstehen. In einem abschliessenden Schritt wird das Vorprodukt als Schüttgut bei 1550 °C für 5 Minuten gesintert. Der Dispergator wird beim Sintern herausgebrannt.

Ein erfindungsgemässer Schleifartikel kann beispielsweise wie folgt hergestellt werden: Auf einer Unterlage aus Vulkanfiber mit einer Dicke von 0,8 mm wird eine Phenolharz-Dispersion als Grundbinder-Vorläufer in einer Menge von 120 g/m² aufgetragen. Anschliessend werden 600 g/m² der erfindungsgemässen Schleifkörner mittels elektrostatischer Streuung aufgetragen. Daraufhin wird der Grundbinder-Vorläufer zu einem Grundbinder gehärtet. Über dem Grundbinder und den Schleifkörnern wird eine Phenolharz-Dispersion in einer Menge von 800 g/m² als Deckbinder-Vorläufer aufgetragen, welche ebenfalls gehärtet wird.

## Patentansprüche

1. Schleifkorn (110; 210; 310; 410; 510; 610; 710; 810; 1110; 1210; 1310; 1310'), enthaltend einen Basiskörper (115; 215; 315; 415; 515; 615; 715; 815; 1115; 1215; 1315; 1315') mit einer Unterseite (116; 216; 316; 416; 516; 616; 716; 816; 1116; 1216; 1316; 1316') und einer gegenüberliegenden Oberseite (118; 218; 318; 418; 518; 618; 718; 818; 1118; 1218) und mindestens einen Aufsatzkörper (120; 220; 320; 420; 520; 620; 720; 820; 1120; 1220; 1320; 1320') mit einer Unterseite (121; 221; 321; 421; 521; 621; 721; 821; 1121; 1221), die auf der Oberseite (118; 218; 318; 418; 518; 618; 718; 818; 1118; 1218) des Basiskörpers (115; 215; 315; 415; 515; 615; 715; 815; 1115; 1215; 1315; 1315') angeordnet ist,
**dadurch gekennzeichnet, dass**
die Aussenkontur (122; 222; 322; 422; 522; 622; 722; 822; 1122; 1222) der Unterseite (121; 221; 321; 421; 521; 621; 721; 821; 1121; 1221) des Aufsatzkörpers (120; 220; 320; 420; 520; 620; 720; 820; 1120; 1220; 1320; 1320') vollständig innerhalb der Aussenkontur (119; 219; 319; 419; 519; 619; 719; 819; 1119; 1219) der Oberseite (18) des Basiskörpers (115; 215; 315; 415; 515; 615; 715; 815; 1115; 1215; 1315; 1315') verläuft.

2. Schleifkorn (110; 210; 310; 410; 510; 610; 710; 810; 1110; 1210; 1310; 1310') gemäss Anspruch 1,
**dadurch gekennzeichnet, dass**
jeder Punkt der Aussenkontur (122; 222; 322; 422; 522; 622; 722; 822; 1122; 1222) der Unterseite (121; 221; 321; 421; 521; 621; 721; 821; 1121; 1221) des Aufsatzkörpers (120; 220; 320; 420; 520; 620; 720; 820; 1120; 1220; 1320; 1320') einen Abstand von der Aussenkontur (119; 219; 319; 419; 519; 619; 719; 819; 1119; 1219) der Oberseite (18) des Basiskörpers (115; 215; 315; 415; 515; 615; 715; 815; 1115; 1215; 1315; 1315') hat, der mindestens 1%, bevorzugt mindestens 2%, weiter bevorzugt mindestens 10%, noch weiter bevorzugt mindestens 20%, besonders bevorzugt mindestens 30% der Höhe (h) des Schleifkorns (110; 210; 310; 410; 510; 610; 710; 810; 1110; 1210; 1310; 1310') beträgt.

3. Schleifkorn (110; 210; 310; 410; 510; 610; 710; 810; 1110; 1210; 1310; 1310') gemäss einem der vorangehenden Ansprüche,
**dadurch gekennzeichnet, dass**
das Verhältnis aus der Höhe (h1) des Basiskörpers (115; 215; 315; 415; 515; 615; 715; 815; 1115; 1215; 1315; 1315') und der Höhe (h2) des Aufsatzkörpers (120; 220; 320; 420; 520; 62; 720; 820; 1120; 1220; 1320; 1320') im Bereich von 1:1 bis 1:8, bevorzugt von 1:2 bis 1:6, besonders bevorzugt von 1:4 bis 1:5 liegt.

4. Schleifkorn (110; 210; 310; 410; 510; 610; 710; 810; 1110; 1210; 1310; 1310') gemäss einem der vorangehenden Ansprüche,
**dadurch gekennzeichnet, dass**
der Basiskörper (115; 215; 315; 415; 515; 615; 715; 815; 1115; 1215; 1315; 1315') die Form eines Zylinders, insbesondere eines Prismas, hat, dessen Grundfläche die Unterseite (116; 216; 316; 416; 516; 616; 716; 816; 1116; 1216; 1316; 1316') des Basiskörpers (115; 215; 315; 415; 515; 615; 715; 815; 1115; 1215; 1315; 1315') bildet und dessen Deckfläche die Oberseite (118; 218; 318; 418; 518; 618; 718; 818; 1118; 1218) des Basiskörpers (115; 215; 315; 415; 515; 615; 715; 815; 1115; 1215; 1315; 1315') bildet.

5. Schleifkorn gemäss einem der vorangehenden Ansprüche,
**dadurch gekennzeichnet, dass**
der Basiskörper die Form eines Kegelstumpfs, insbesondere eines Pyramidenstumpfs, hat, dessen Grundfläche die Unterseite des Basiskörpers bildet und dessen Deckfläche die Oberseite des Basiskörpers bildet.

6. Schleifkorn (110; 210; 310; 410; 510; 710; 810; 1310; 1310') gemäss einem der vorangehenden Ansprüche,
**dadurch gekennzeichnet, dass**
mindestens ein Aufsatzkörper (120; 220; 320; 420; 520; 720; 820; 1320; 1320') die Form eines Zylinders, insbesondere eines Prismas, hat, dessen Grundfläche durch die Unterseite (121; 221; 321; 421; 521; 721; 821) dieses Aufsatzkörpers (120; 220; 320; 420; 520; 720; 820; 1320; 1320') gebildet ist.

7. Schleifkorn (610) gemäss einem der vorangehenden Ansprüche,
**dadurch gekennzeichnet, dass**
mindestens ein Aufsatzkörper (620) die Form eines Kegels, insbesondere einer Pyramide, oder eines Kegelstumpfs, insbesondere eines Pyramidenstumpfs, hat, wobei die Grundfläche des Kegels bzw. Kegelstumpfs durch die Unterseite (621) dieses Aufsatzkörpers (620) gebildet ist.

8. Schleifkorn (110; 210; 310; 410; 510; 610; 710; 810; 1110; 1210; 1310; 1310') gemäss einem der vorangehenden Ansprüche,
**dadurch gekennzeichnet, dass**
es ein keramisches Material, insbesondere ein polykristallines keramisches Material, enthält oder daraus besteht, bevorzugt Aluminiumoxid, besonders bevorzugt α-Al₂O₃.

9. Gesamtheit von Schleifkörnern (110; 210; 310; 410; 510; 610; 710; 810; 1110; 1210; 1310; 1310'),
**dadurch gekennzeichnet, dass**
sie mindestens 20 Gew.-%, bevorzugt mindestens 50 Gew.-%, besonders bevorzugt mindestens 90 Gew.-% Schleifkörner (110; 210; 310; 410; 510; 610; 710; 810; 1110; 1210; 1310; 1310') nach einem der vorangehenden Ansprüche enthält.

10. Verfahren zum Herstellen mindestens eines Schleifkorns (110; 210; 310; 410; 510; 610; 710; 810; 1110; 1210; 1310; 1310') oder einer Gesamtheit von Schleifkörnern (110; 210; 310; 410; 510; 610; 710; 810; 1110; 1210; 1310; 1310') gemäss einem der vorangehenden Ansprüche,
**gekennzeichnet durch** die folgenden Schritte:
a) Herstellung oder Bereitstellung einer Dispersion, enthaltend α-Aluminiumoxid-Partikel und/oder Partikel, welche in α-Aluminiumoxid umwandelbar sind, sowie mindestens ein flüchtiges Dispersionsmittel, bevorzugt Wasser;
b) Einfüllen der Dispersion in mindestens eine Vertiefung einer Giessform;
c) optional Abrakeln einer Oberseite der Giessform, um zumindest einen Teil der Dispersion zu entfernen, der über die Oberseite der Giessform übersteht;
d) Entfernen eines Teiles der flüchtigen Komponenten der Dispersion, so dass mindestens ein Schleifkorn-Vorprodukt entsteht;
e) Entfernen des Schleifkorn-Vorprodukts aus der Giessform;
f) optional Kalzinieren des Schleifkorn-Vorprodukts;
g) Sintern des Schleifkorn-Vorprodukts, um mindestens ein Schleifkorn (110; 210; 310; 410; 510; 610; 710; 810; 1110; 1210; 1310; 1310') zu erhalten.

11. Giessform zum Herstellen mindestens eines Schleifkorns (110; 210; 310; 410; 510; 610; 710; 810; 1110; 1210; 1310; 1310') nach einem der Ansprüche 1 bis 8, wobei die Giessform mindestens eine Vertiefung, bevorzugt eine Vielzahl von Vertiefungen, mit einer jeweiligen Oberfläche aufweist, wobei die Oberfläche komplementär zur Form zumindest eines Teils der Oberfläche des Schleifkorns (110; 210; 310; 410; 510; 610; 710; 810; 1110; 1210; 1310; 1310') ist.

12. Schleifartikel, enthaltend eine Gesamtheit von Schleifkörnern (110; 210; 310; 410; 510; 610; 710; 810; 1110; 1210; 1310; 1310') gemäss Anspruch 9.

13. Verfahren zum Herstellen eines Schleifartikels gemäss Anspruch 12, enthaltend einen Schritt, in dem eine Gesamtheit von Schleifkörnern (110; 210; 310; 410; 510; 610; 710; 810; 1110; 1210; 1310; 1310') gemäss Anspruch 9 an und/oder in einem Substrat fixiert wird, insbesondere mittels eines Bindemittels.

14. Verfahren zum Schleifen einer Oberfläche, insbesondere einer lackierten Oberfläche, mit einem Schleifartikel gemäss Anspruch 12.
